# EUROPÄISCHE PATENTANMELDUNG

(11) **EP 3 747 981 A1**
(43) Veröffentlichungstag der Anmeldung: **09.12.2020**
(21) Anmeldenummer: 20178850.2
(22) Anmeldetag: 08.06.2020
(51) Int. Cl.: C12C 13/02, C12C 12/00, C12C 7/20, C12C 5/02

(54) **VERFAHREN ZUR HERSTELLUNG VON BIER**

(30) Priorität: 06.06.2019 DE 102019003973
(71) Anmelder: Fürst von Wrede GmbH & Co. Unternehmens-KG, 91792 Ellingen (DE)
(72) Erfinder: Sauer, Werner, 24944 Flensburg (DE)
(74) Vertreter: Mahler, Peter

(57) **Zusammenfassung**

Die vorliegende Erfindung betrifft ein Verfahren zur Herstellung von Bier. Es ist Aufgabe der Erfindung, ein Verfahren zur Herstellung von Bier vorzuschlagen, mit dem der Geschmack des Biers positiv beeinflusst werden kann. Die Aufgabe wird erfindungsgemäß gelöst durch ein Verfahren zur Herstellung von Bier, das dadurch gekennzeichnet ist, dass die Würze vor und/oder während des Kochens mindestens zeitweise mit erhitztem Holz in Kontakt gebracht wird, wobei die Temperatur des Holzes höher als die Temperatur der Würze liegt.

## Beschreibung

Die vorliegende Erfindung betrifft ein Verfahren zur Herstellung von Bier.

Bier wird in einem Brauverfahren hergestellt, bei dem zunächst aus Getreide, vorwiegend Gerste oder Weizen, Malz hergestellt wird. Das Malz wird dann geschrotet. Anschließend wird dem Schrot beim Maischen Wasser zugesetzt und die Maische auf unterschiedliche Art thermisch behandelt, bis die in der Maische enthaltene Stärke vollständig in Malzzucker (Maltose) umgesetzt ist.

Anschließend wird die Maische geläutert. Dabei wird der Malztreber in einem Läuterbottich von der Flüssigkeit, der sogenannten Würze, getrennt. Die Würze ist der flüssige, vergärbare Teil der Maische. Als Vorderwürze wird dabei der unmittelbar aus dem Läutergefäß gewinnbare flüssige Teil der Maische bezeichnet. Nach Ablauf der Vorderwürze werden die beim Maischen aufgeschlossenen Extrakte durch Nachgüsse mit heißem Wasser aus dem Treber ausgewaschen.

Die gesamte Würze bestehend aus Vorderwürze und Aufgüssen wird dann in der Würze- oder Sudpfanne unter Zugabe von Hopfen gekocht. Heute wird die Würze dazu in der Sudpfanne, die aus Kupfer oder Edelstahl besteht, erhitzt. Früher bestanden Sudpfannen oft aus Holz oder Lehm, so dass eine direkte Beheizung nicht möglich war. Zum Kochen der Würze wurden deshalb Steine im Feuer auf bis zu 800°C erhitzt und in die Würze eingebracht, so dass die Würze zum Kochen gebracht werden konnte. Auch heute wird noch sogenanntes Steinbier gebraut, bei dem im Brauprozess heiße Steine eingesetzt werden.

Durch die hohe Temperatur der heißen Steine kommt es zum Karamellisieren der Maltose an der Oberfläche der Steine, wodurch der Geschmack des Biers beeinflusst wird. Die hohe Temperatur der Steine kann jedoch auch zu unangenehmen, bitteren Geschmacksnoten führen.

Nach dem Sud werden noch geronnenes Eiweiß und andere Schwebstoffe von der Würze getrennt, die Flüssigkeit auf die Gärtemperatur abgekühlt und zur Gärung in einen Lagertank gefüllt.

Zur Beeinflussung des Geschmacks des Bieres kann die Lagerung zumindest zeitweise in Holzfässern erfolgen oder es können dem Bier im Edelstahl-Lagertank Holzchips zugesetzt werden, um einen Holzgeschmack zu erreichen.

Aus der JP 2017-225 427 A ist ein Verfahren bekannt, bei dem der Würze zur Kochung Holzchips zugegeben werden, um dem Bier in kurzer Zeit eine Holznote zu verleihen. Die Holzchips werden dabei zusammen mit der Würze auf Temperaturen von maximal rund 100°C erhitzt.

Es ist Aufgabe der Erfindung, ein Verfahren zur Herstellung von Bier vorzuschlagen, mit dem der Geschmack des Biers positiv beeinflusst werden kann.

Die Aufgabe wird erfindungsgemäß gelöst durch ein Verfahren zur Herstellung von Bier, das dadurch gekennzeichnet ist, dass die Würze vor und/oder während des Kochens mindestens zeitweise mit erhitztem Holz in Kontakt gebracht wird, wobei die Temperatur des Holzes höher als die Temperatur der Würze liegt.

Es ist bekannt, dass die Zugabe von Holz dem Bier einen besonderen Geschmack verleiht. Anders als bei der üblichen Zugabe von Holzpellets oder -chips in den Gärtank wird das Holz gemäß dem erfindungsgemäßen Verfahren aber vor und/oder während der Kochung mit der Würze in Kontakt gebracht und vorher auf eine Temperatur erwärmt, die höher ist als die Temperatur der Würze, was sich positiv auf die Entwicklung und Übertragung von Aromastoffen auswirkt.

Der Kontakt zwischen Holz und Würze kann insbesondere dadurch erreicht werden, dass die Würze über das Holz geleitet und wieder aufgefangen wird. Alternativ oder zusätzlich kann das Holz der Würze in der Würzepfanne zugeführt werden.

Beispielsweise kann das Holz kontrolliert auf die gewünschte Temperatur aufgeheizt und im einem Behältnis gelagert werden, in das Bierwürze eingeleitet und nach Kontakt mit dem Holz wieder aufgefangen wird. Es kann ein kontinuierlicher Strom eingestellt oder ein Volumen Würze in das Behältnis eingelassen und nach Ablauf einer vorgegebenen Zeit wieder abgelassen werden.

Das Holz kann beispielsweise auf eine Temperatur oberhalb des Siedepunktes der Würze aufgeheizt werden. Beim Kontakt mit der Würze kommt es dann zu kurzem Aufkochen der Würze im Bereich um das erhitzte Holz herum. Dadurch können Aromastoffe aus dem Holz gelöst werden, die bei niedrigeren Temperaturen nicht gelöst würden.

Die Temperatur des Holzes kann insbesondere zwischen 110°C und 180°C liegen, insbesondere unter 160°C und vorzugsweise unter 140°C.

Das Holz kann auch auf eine Temperatur oberhalb der Karamellisierungstemperatur der in der Bierwürze enthaltenen Maltose erhitzt werden. Dadurch karamellisiert die Maltose an der heißen Holzoberfläche, was dem Bier weitere Geschmackskomponenten verleiht. Die Temperatur kann dabei je nach gewünschtem Grad der Karamellisierung gewählt werden. Bei höheren Temperaturen kommt es zu einer stärkeren Karamellisierung mit Röstaromen, bis leichte Bitternoten hinzukommen. Die Temperatur kann insbesondere mehr als 180°C betragen.

Vorzugsweise kann die Temperatur des Holzes unterhalb der Zündtemperatur der verwendeten Holzsorte liegen. In der Regel beträgt die Zündtemperatur von Holz zwischen 280°C und 340°C, je nach Holzsorte. Temperaturen darunter reichen für die Karamellisierung von Maltose aus, ohne die Handhabung des erhitzten Holzes zu erschweren. Die Temperatur kann insbesondere unter 250°C und vorteilhaft unter 230°C liegen, um die entstehenden Bitteraromen zu begrenzen.

Das Holz kann mit der Bierwürze aber auch zumindest teilweise glühend in Kontakt gebracht werden. Durch die dabei entstehende Asche entsteht ein rauchiger Geschmack.

Die Holzoberfläche kann vor dem Kontakt mit der Bierwürze abgeflammt oder getoastet werden. Dabei wird die Holzoberfläche durch eine Flamme leicht gebräunt, wodurch wiederum Rauch- und Röstaromen entstehen. Vorteilhaft kann das vor dem Erhitzen des Holzes geschehen, um ein Entflammen des bereits erhitzten Holzes zu vermeiden.

Das verwendete Holz kann nach dem Kontakt mit der Würze während der Gärung zumindest zeitweise in den Lagertank gelegt werden. Während der Lagerung und Reifung des Bieres löst sich das am Holz gebildete Karamell und verleiht dem Bier weitere Geschmackskomponenten. Beim Transport des Holzes in den Lagertank ist auf Sterilität zu achten, damit das Bier bei der Lagerung stabil bleibt. Durch die Erhitzung des Holzes ist zunächst von Sterilität auszugehen, so dass vor allem bei der Umlagerung auf Sterilität zu achten ist.

Um intensiven Karamellgeschmack auf das Bier zu übertragen, kann das Holz nach dem Kontakt mit der Würze auch mit einer Flüssigkeit gespült werden. Auf der Oberfläche des Holzes gebildetes Karamell kann so gelöst und der Würze zugeführt werden. Als Spülflüssigkeit kommt insbesondere Bierwürze in Betracht. Alternativ kann aber auch z.B. Wasser verwendet werden, das ggfs. erhitzt auf das Holz geleitet wird, oder in das das Holz eingelegt wird, um den entstandenen Karamell abzulösen. Die Spülflüssigkeit kann dann der Bierwürze zugefügt werden.

Durch geeignete Wahl der Größe der verwendeten Holzstücke kann die Dauer und die Intensität der Karamellisierung beeinflusst werden. Beispielsweise halten große erhitzte Holzscheite die Ausgangstemperatur länger als kleinere Holzscheite, so dass die Dauer der Karamellisierung durch die Größe der Holzscheite beeinflusst werden kann. Kleinere Holzscheite können beispielsweise auf eine höhere Temperatur erhitzt werden. Durch die höhere Ausgangstemperatur werden mehr Bitterstoffe gebildet, allerdings nur kurzzeitig, da die Temperatur nach Kontakt mit der Bierwürze schneller fällt, wodurch süßere Karamellnoten erreicht werden. Durch eine vergrößerte Kontaktoberfläche kann der Karamellisierungsvorgang verstärkt werden.

Insbesondere können Holzscheite einer Kantenlänge von 30 bis 50 cm verwendet werden.

Wird die Würze über das Holz geleitet, kann es vorteilhaft sein, kleinere Holzstücke oder Holzchips oder -pellets zu verwenden, um die mit der Würze in Kontakt geratende Oberfläche zu vergrößern.

Als Holzsorten kommen vorzugsweise Eiche oder Akazie zum Einsatz. Eine Mischung dieser beiden Holzsorten oder anderer Holzsorten ist natürlich auch möglich. Es ist auch denkbar, dass andere aromatragende Stoffe verwendet werden, wie beispielsweise Tannenzapfen oder andere Naturmaterialien.

Wird die Würze über das Holz geleitet, so kann das Holz beispielsweise in einem separaten Behälter mit einem Zu- und einem Ablauf angeordnet sein, so dass die Würze in einem Kreislauf aus der Würzepfanne über das Holz und zurück in die Würzepfanne gepumpt werden kann. Die Würze kann vor oder während der Kochung über das Holz gepumpt werden.

Der Inhalt der Würzepfanne kann auch vollständig über das Holz in ein weiteres Behältnis, z.B. eine zweite Würzepfanne, geleitet werden, in der dann die Kochung stattfindet. Die Würze kann auch beim Abmaischen über das Holz in die Würzepfanne geleitet werden.

Soll das Holz zum Kontakt mit der Bierwürze in die Würzepfanne eingetaucht werden, so wird das Holz vorzugsweise in einer Vorrichtung angeordnet, die guten Kontakt der Bierwürze zur Oberfläche des Holzes zulässt. Außerdem sollte das Holz vollständig in die Bierwürze eintauchen können und nicht an der Oberfläche schwimmen.

In der Würzepfanne kann auch eine Strömung eingestellt werden, so dass das eingebrachte erhitzte Holz von der Bierwürze permanent oder zumindest zeitweise angeströmt wird. Durch vermehrten Kontakt zwischen der Holzoberfläche und der Bierwürze geschieht die Karamellisierung schneller oder intensiver. Gleichzeitig wird das sich an der Holzoberfläche bildende Karamell durch die Strömung zumindest teilweise wieder gelöst und trägt zur Intensivierung des Geschmacks bei.

Die nachfolgend dargestellten Ausführungsbeispiele des erfindungsgemäßen Brauverfahrens betrachten jeweils Teilaspekte der Erfindung und können - soweit sinnvoll - miteinander kombiniert werden:
Beispiel 1: Von der in der Würzepfanne befindlichen Würze wird ein Teil in ein Gefäß gepumpt, in dem sich auf ca. 130°C erhitztes Eichenholz, beispielsweise in Holzscheiten von 30 bis 50 cm Länge, befindet. Nach einer Ruhezeit von beispielsweise 10 min wird die Würze aus dem Gefäß zurück in die Würzepfanne gepumpt. Der Anteil der Würze, der mit dem Holz in Kontakt war, hat einen intensiven Holzgeschmack angenommen. Der intensive Geschmack fügt sich nach Verdünnung durch die in der Würzepfanne verbliebene Würze harmonisch in den Biergeschmack ein. Die Intensität und die Geschmacksnoten lassen sich durch die Holztemperatur, das mit dem Holz in Kontakt gebrachte Volumen, die Größe der Holzoberfläche und die Verweildauer der Würze im Gefäß mit dem Holz beeinflussen.
Beispiel 2: Von der Würzepfanne führt eine erste Leitung zu einem Gefäß, in dem sich auf ca. 200°C erhitztes Eichenholz befindet und eine zweite Leitung vom Gefäß zurück zur Würzepfanne. Eine Pumpe erlaubt einen permanenten Würzestrom durch das Gefäß mit dem Holz. Die Würze kann so mit dem Holz in Kontakt gebracht werden, wobei die oben beschriebenen Effekte eintreten und die Maltose zusätzlich am erhitzten Holz karamellisiert. Der Kontakt mit dem Holz kann sowohl vor der Kochung, also mit kalter Würze, als auch während der Kochung der Würze geschehen. Die zu erreichenden Geschmacksnoten lassen sich durch die Strömungsgeschwindigkeit, die Größe des Gefäßes mit dem Holz, die Holzmenge, die Holzoberfläche und die Temperatur der Würze beeinflussen.
Beispiel 3: Beim Läutern wird die Würze direkt aus dem Läuterbottich über das auf über 180°C erhitzte Holz zur anschließenden Kochung in die Würzpfanne geleitet. Dabei karamellisiert ein Teil der in der Würze enthaltenen Maltose und die Würze nimmt Holzgeschmack an. Optional kann das Holz nach dem Darüberleiten der Würze in die Würzepfanne und/oder den Lagertank gelegt werden, um noch weitere Aromen abzugeben.
Beispiel 4: Während der Kochung in der Sudpfanne wird der Würze erhitztes Eichenholz in einem Metallkorb zugeführt. Der Metallkorb ist so gestaltet, dass das Holz in Holzscheiten von 30 bis 50 cm Länge derart angeordnet ist, dass die Oberflächen aller Scheite guten Kontakt zur Bierwürze bekommen können. Das Gewicht des Metallkorbs ist so gewählt, dass das Holz im Korb in die Würze eintaucht und nicht auf der Oberfläche schwimmt.
   Das Holz ist auf eine Temperatur von ca. 190°C erhitzt. Beim Eintauchen karamellisiert die in der Bierwürze enthaltene Maltose leicht, so dass ein Karamellgeschmack mit dezenter Süße im Bier entsteht. Das Holz kühlt in der kochenden Würze langsam auf unter 180°C ab, so dass die Karamellisierung endet. Holzaromen aus dem warmen Eichenholz gehen auf die Würze über, so dass zusätzlich ein ausgewogener Holzgeschmack des Biers entsteht.
Beispiel 5: Das der Bierwürze zugeführte Holz weist eine Temperatur von ca. 220°C auf. Beim Eintauchen in die Bierwürze entstehen bei der Karamellisierung aufgrund der hohen Temperatur zunächst kurzzeitig leicht bittere Aromen, die dem fertigen Bier eine herzhafte, leicht bittere Note verleihen. Beim Abkühlen des Holzes entsteht weiter eine herzhafte Note von Röstaromen und anschließend süßliche Aromen, die im fertigen Bier zusammen mit den darüber hinaus übertragenen Holzaromen dezent ausbalanciert sind.
Beispiel 6: Der Bierwürze wird erhitztes Holz in einem Korb zugeführt, wobei Temperatur, Dauer und Zeitpunkt der Zuführung nach dem gewünschten Geschmacksergebnis wählbar sind. Noch während der Kochung wird der Korb mit dem Holz aus der Würze entfernt und in den Lagertank gelegt. Aufgrund der hohen Temperatur während der Kochung ist es kein Problem, das Holz dem Lagertank steril zuzuführen, so dass es nicht zu Haltbarkeitsproblemen während der Lagerung kommt. Die Würze wird nach der Kochung zur Gärung in den Lagertank gefüllt, so dass dort einerseits eine Lagerung auf Holz erfolgt und sich andererseits das am Holz angelagerte Karamell während der Lagerdauer lösen kann.
Beispiel 7: Das Holz wird, bevor es der Bierwürze zugeführt wird, leicht getoastet. Dadurch werden neben den vorstehend beschriebenen Aromen Röstaromen auf das Bier übertragen.
Beispiel 8: Ein ca. 40 cm langer Abschnitt eines Eichenstammes mit ca. 60 cm Durchmesser wird auf ca. 210°C erhitzt und mit der Bierwürze in Kontakt gebracht.
Beispiel 9: In der Bierwürze wird, z.B. durch Düsen, eine Strömung eingestellt, die auf die Position des einzubringenden Holzes ausgerichtet ist. Das Holz wird so permanent von frischer Bierwürze angeströmt, wodurch die darin enthaltene Maltose karamellisiert, sich gleichzeitig aber nicht oder nur geringfügig an der Holzoberfläche anlagert. Der Karamellisierungsvorgang sowie die Lösung des Karamells in der Würze werden entscheidend beschleunigt.
Beispiel 10: Bei der Läuterung wird nur die Vorderwürze, die besonders maltosehaltig ist, in die Sudpfanne eingeleitet und gemäß dem erfindungsgemäßen Verfahren behandelt. Neben der besonderen Qualität von Bier aus Vorderwürze kann das erfindungsgemäße Verfahren durch den hohen Maltoseanteil besonders effizient ablaufen.

## Patentansprüche

1. Verfahren zur Herstellung von Bier, **dadurch gekennzeichnet, dass** die Würze vor und/oder während des Kochens mindestens zeitweise mit erhitztem Holz in Kontakt gebracht wird, wobei die Temperatur des Holzes höher als die Temperatur der Würze liegt.

2. Verfahren nach Anspruch 1, **dadurch gekennzeichnet, dass** die Würze über das Holz geleitet und wieder aufgefangen wird.

3. Verfahren nach Anspruch 1 oder 2, **dadurch gekennzeichnet, dass** das Holz der Würze in der Würzepfanne zugeführt wird.

4. Verfahren nach einem der Ansprüche 1 bis 3, **dadurch gekennzeichnet, dass** das Holz eine Temperatur aufweist, die größer als Siedepunkt der Würze ist.

5. Verfahren nach einem der Ansprüche 1 bis 4, **dadurch gekennzeichnet, dass** die Temperatur des Holzes zwischen 110°C und 180°C liegt, insbesondere unter 160°C und vorzugsweise unter 140°C liegt.

6. Verfahren nach einem der Ansprüche 1 bis 4, **dadurch gekennzeichnet, dass** das Holz eine Anfangstemperatur aufweist, die oberhalb der Karamellisierungstemperatur von Maltose liegt.

7. Verfahren nach einem der Ansprüche 1 bis 4 oder 6, **dadurch gekennzeichnet, dass** das Holz eine Anfangstemperatur aufweist, die unterhalb der Zündtemperatur des verwendeten Holzes liegt.

8. Verfahren nach einem der Ansprüche 1 bis 4 oder 6 oder 7, **dadurch gekennzeichnet, dass** die Temperatur des Holzes zwischen 180°C und 280°C liegt, insbesondere unter 250°C und vorzugsweise unter 230°C liegt.

9. Verfahren nach einem der Ansprüche 1 bis 4 oder 6 oder 7, **dadurch gekennzeichnet, dass** das Holz zumindest teilweise glühend mit der Würze in Kontakt gebracht wird.

10. Verfahren nach einem der Ansprüche 1 bis 9, **dadurch gekennzeichnet, dass** die Holzoberfläche vor der Verwendung getoastet wird.

11. Verfahren nach einem der Ansprüche 1 bis 10, **dadurch gekennzeichnet, dass** das Holz nach Kontakt mit der Würze während der Gärung zumindest zeitweise in den Lagertank gelegt wird.

12. Verfahren nach einem der Ansprüche 1 bis 11, **dadurch gekennzeichnet, dass** das Holz nach Kontakt mit der Würze mit Flüssigkeit gespült und die Spülflüssigkeit der Würze zugegeben wird.

13. Verfahren nach Anspruch 12, **dadurch gekennzeichnet, dass** es sich bei der Spülflüssigkeit um Bierwürze handelt.

14. Verfahren nach einem der Ansprüche 1 bis 13, **dadurch gekennzeichnet, dass** Holz in Form von Scheiten einer Kantenlänge von 30 bis 50 cm verwendet wird.

15. Verfahren nach einem der Ansprüche 1 bis 14, **dadurch gekennzeichnet, dass** Holz der folgenden Holzsorten allein oder in Kombination verwendet wird: Eiche, Akazie.
